# EUROPEAN PATENT SPECIFICATION

(11) **EP 3 137 985 B1**
(45) Date of publication and mention of the grant of the patent: **26.01.2022**
(21) Application number: 15730892.5
(22) Date of filing: 27.05.2015
(51) Int. Cl.: G06F 3/14

(54) **METHOD AND SYSTEM TO CREATE A RENDERING PIPELINE**
VERFAHREN UND VORRICHTUNG ZUR ERZEUGUNG EINER RENDERING-PIPELINE
PROCÉDÉ ET DISPOSITIF DE CRÉATION D'UNE PIPELINE DE RENDU

(30) Priority: 30.05.2014 US 201462005131 P; 30.09.2014 US 201414501933
(43) Date of publication of application: 08.03.2017
(73) Proprietor: Apple Inc., Cupertino CA 95014 (US)
(72) Inventor: AVKAROGULLARI, Gokhan, Cupertino, CA 95014 (US); SUNALP, Eric, O., Cupertino, CA 95014 (US); SCHREYER, Richard, W., Cupertino, CA 95014 (US); KAN, Alexander, K., Cupertino, CA 95014 (US)
(74) Representative: Rooney, John-Paul
(86) International application number: PCT/US2015/032518
(87) International publication number: WO 2015/183855

(56) References cited:
- WO-A1-2012/082423
- WO-A1-2012/082423
- US-A1- 2008 001 952
- US-A1- 2011 063 296
- US-A1- 2011 063 296
- US-A1- 2013 265 309
- MATT SANDY: "DirectX 12", INTERNET CITATION, 20 March 2014 (2014-03-20), pages 1-19, XP002742458, Retrieved from the Internet: URL:http://blogs.msdn.com/b/directx/archiv e/2014/03/20/directx-12.aspx [retrieved on 2015-07-20]
- Ivan Nevraev: "Microsoft Introduction to Direct3D 12", , 4 April 2014 (2014-04-04), pages 1-43, XP055203398, Retrieved from the Internet: URL:http://www.google.de/url?sa=t&rct=j&q= &esrc=s&source=web&cd=2&cad=rja&uact=8&ved =0CDEQFjABahUKEwiCmsP_w-nGAhUKPhQKHcqZAP8& url=http%3A%2F%2Famd-dev.wpengine.netdna-c dn.com%2Fwordpress%2Fmedia%2F2012%2F10%2FI ntroduction-To-DX12-Ivan-Nevraev.ppsx&ei=g 9GsVcLMLor8UMqzgvgP&usg=AFQjCNH0huTmfeNNlI _Y7kH5XtvH [retrieved on 2015-07-20]
- Matt Sandy: "DirectX 12", , 20 March 2014 (2014-03-20), XP002742458, Retrieved from the Internet: URL:http://blogs.msdn.com/b/directx/archiv e/2014/03/20/directx-12.aspx [retrieved on 2015-07-20]
- Ivan Nevraev: "Introduction to Direct3D 12", , 4 April 2014 (2014-04-04), pages 1-43, XP055203398, Retrieved from the Internet: URL:http://www.google.de/url?sa=t&rct=j&q= &esrc=s&source=web&cd=2&cad=rja&uact=8&ved =0CDEQFjABahUKEwiCmsP_w-nGAhUKPhQKHcqZAP8& url=http%3A%2F%2Famd-dev.wpengine.netdna-c dn.com%2Fwordpress%2Fmedia%2F2012%2F10%2FI ntroduction-To-DX12-Ivan-Nevraev.ppsx&ei=g 9GsVcLMLor8UMqzgvgP&usg=AFQjCNH0huTmfeNNlI _Y7kH5XtvH [retrieved on 2015-07-20]
- Ivan Nevraev: "Microsoft Introduction to Direct3D 12", , 4 April 2014 (2014-04-04), pages 1-43, XP055203398, Retrieved from the Internet: URL:http://www.google.de/url?sa=t&rct=j&q= &esrc=s&source=web&cd=2&cad=rja&uact=8&ved =0CDEQFjABahUKEwiCmsP_w-nGAhUKPhQKHcqZAP8& url=http%3A%2F%2Famd-dev.wpengine.netdna-c dn.com%2Fwordpress%2Fmedia%2F2012%2F10%2FI ntroduction-To-DX12-Ivan-Nevraev.ppsx&ei=g 9GsVcLMLor8UMqzgvgP&usg=AFQjCNH0huTmfeNNlI _Y7kH5XtvH [retrieved on 2015-07-20]

## Description

### BACKGROUND

This disclosure relates generally to the field of computer programming. More particularly, but not by way of limitation, it relates to techniques for programming graphical and computational applications to execute on a variety of graphical and computational processors.

Computers and other computational devices typically have at least one programmable processing element that is generally known as a central processing unit (CPU). They frequently also have other programmable processors that are used for specialized processing of various types, such as graphics processing operations, hence are typically called graphics processing units (GPUs). GPUs generally comprise multiple cores or processing elements designed for executing the same instruction on parallel data streams, making them more effective than general-purpose CPUs for algorithms in which processing of large blocks of data is done in parallel. In general, a CPU functions as the host and hands-off specialized parallel tasks to the GPUs.

Several frameworks have been developed for heterogeneous computing platforms that have CPUs and GPUs. These frameworks include OpenGL^{™}. OpenGL focuses on using the GPU for graphics processing and provides APIs for rendering 2D and 3D graphics.

The OpenGL framework offers a C-like development environment in which users can create applications to run on various different types of CPUs, GPUs, digital signal processors (DSPs), and other processors. OpenGL also provides a compiler and a runtime environment in which code can be compiled and executed within a heterogeneous computing system. When using OpenGL, developers can use a single, unified language to target all of the processors for which an OpenGL driver is available. This is done by presenting the developer with an abstract platform model and application programming interface (API) that conceptualizes all of these architectures in a similar way, as well as an execution model supporting data and task parallelism across heterogeneous architectures.

When an OpenGL program is executed, a series of API calls configure the system for execution, an embedded compiler compiles the OpenGL code, and the runtime asynchronously coordinates execution between parallel tasks. A typical OpenGL-based system runs source code through an embedded compiler on the end-user system to generate executable code for a target GPU available on that system. Then, the executable code, or portions of the executable code, are sent to the target GPU and are executed. However, this approach, particularly the compiling step, may take too long for some types of applications, such as graphics-intensive games.

In some sense, OpenGL itself may be considered as a state machine, with each command potentially resulting in a state change that requires the generation and/or compilation of new GPU code. This arises from the fact that certain GPU functions rely on dedicated circuitry within the GPU, while others require use of the programmable features of the GPU. Depending on the particular GPU hardware being used, these types of state changes can be very expensive from a computation time perspective. Additionally, in recent years, evolution of GPU hardware has outpaced evolution of OpenGL, such that, in some sense, OpenGL APIs are mismatched to the hardware environment in which the programs will run. The result is that a developer may inadvertently be writing code that is particularly inefficient for at least some hardware on which it will run.

Therefore, there is a need in the art for a framework for GPU programming that more closely relate the APIs to the underlying hardware, such that a developer is aware of the distinctions between the fixed-function portions and the programmable portions of modern GPUs. This awareness can enable a developer to write code that executes more efficiently on modern devices.

Matt Sandy, "Direct X 12", 20 March 2014 (Retrieved from the Internet: http://blogs.msdn.com/b/directx/archive/2014/03/20/directx-12.aspx) describes the Direct3D 12 graphics API. The API contains a number of rendering pipeline features which aim to improve the efficiency of certain graphics algorithms through improved utilization of GPU hardware.

Ivan Navraev, "Microsoft Introduction to Direct3D 12", 4 April 2014 (Retrieved from the Internet: https://www.slideshare.net/DevCentralAM D/introduction-to-dx12-by-ivan-nevraev) is a presentation previewing the Direct3D 12 API, and in particular, the pipeline state optimization performed by Direct3D 12.

WO 2012/082423 A1 discloses a system for access to accelerated processing device compute resources to user mode applications. The functionality disclosed allows user mode applications to provide commands to an accelerated processing device without the need for kernel mode transitions in order to access a unified ring buffer. Instead, applications are each provided with their own buffers, which the accelerated processing device hardware can access to process commands. With full operating system support, user mode applications are able to utilize the accelerated processing device in much the same way as a CPU.

US 2011/063296 A1 discloses a method for storing processed data within buffer objects stored in buffer object memory from within shader engines executing on a GPU. The method comprises the steps of receiving a stream of one or more shading program commands via a graphics driver, executing, within a shader engine, at least one of the one or more shading program commands to generate processed data, determining from the stream of one or more shading program commands an address associated with a first data object stored within the buffer memory, and storing, from within the shader engine, the processed data in the first data object stored within the buffer memory.

US 2008/001952 A1 discloses a system for binding resources to particular slots associated with shaders in a graphics pipeline. Resource dependencies between resources being utilized by each shader can be determined, and, based on these resource dependencies, common resource/slot associations can be computed. Each common resource/slot association identifies a particular one of the resources to be associated with a particular one of the slots.

US 2013/265309 A1 discloses a process for rendering graphics that includes performing, with a hardware shading unit of a graphics processing unit (GPU) designated for vertex shading, vertex shading operations to shade input vertices so as to output vertex shaded vertices, wherein the hardware unit is configured to receive a single vertex as an input and generate a single vertex as an output. The process also includes performing, with the hardware shading unit of the GPU, a geometry shading operation to generate one or more new vertices based on one or more of the vertex shaded vertices, wherein the geometry shading operation operates on at least one of the one or more vertex shaded vertices to output the one or more new vertices.

### SUMMARY

The invention is defined by a method according to claim 1, a system according to claim 8 and a non-transitory computer readable medium according to claim 14.

The dependent claims define further advantageous embodiments.

### BRIEF DESCRIPTION OF THE DRAWINGS

Figure 1 is a block diagram illustrating compilation, linking, and execution of a program according to one embodiment.
Figure 2 is a block diagram illustrating a computer system for executing programs on a graphical processor unit according to one embodiment.
Figure 3 is a block diagram illustrating a computer system for compiling and linking programs according to one embodiment.
Figure 4 is a block diagram illustrating a networked system according to one embodiment.
Figure 5A is a block diagram illustrating an exemplary pipeline state object according to one embodiment.
Figure 5B is a block diagram illustrating operation of a render command encoder according to one embodiment.

### DETAILED DESCRIPTION

An innovative GPU framework and related APIs present more accurate representations of the target hardware so that the distinctions between the fixed-function and programmable features of the GPU are perceived by a developer. This permits a program and/or a graphics object generated or manipulated by the program to be understood as not just code, but machine states that are associated with the code. When such an object is defined, the definitional components requiring programmable GPU features can be compiled only once and reused repeatedly as needed. Similarly, when a state change is made, the state changes correspond to the state changes made on the hardware. Additionally, the creation of these immutable objects prevents a developer from inadvertently changing portions of the program or object that cause it to behave differently than intended.

As used herein, the term "a computer system" can refer to a single computer or a plurality of computers working together to perform the function described as being performed on or by a computer system. Similarly, a machine-readable medium can refer to a single physical medium or a plurality of media that may together contain the indicated information stored thereon. A processor can refer to a single processing element or a plurality of processing elements, implemented either on a single chip or on multiple processing chips.

It will be appreciated that in the development of any actual implementation (as in any development project), numerous decisions must be made to achieve the developers' specific goals (e.g., compliance with system- and business-related constraints), and that these goals may vary from one implementation to another. It will also be appreciated that such development efforts might be complex and time-consuming, but would nevertheless be a routine undertaking for those of ordinary skill in the design an implementation of systems having the benefit of this disclosure.

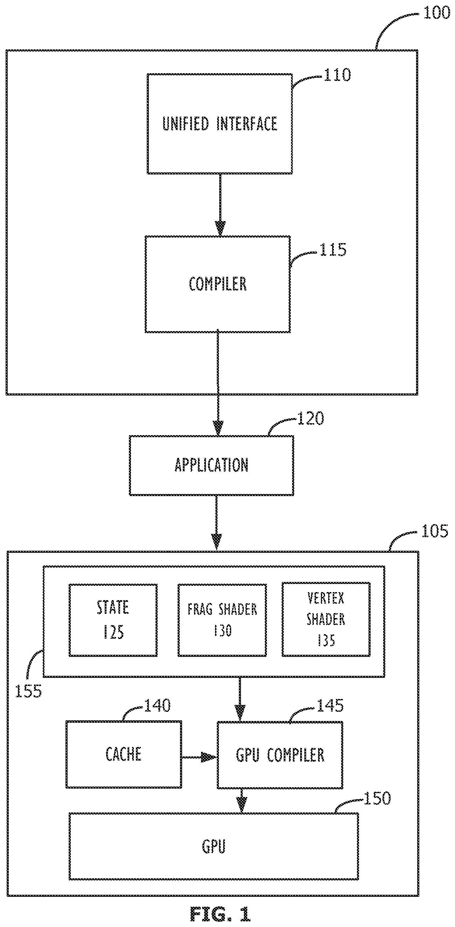

Turning now to FIG. 1, a developer computer system 100 and a target computer system 105 are illustrated in block diagram form according to one embodiment. A developer can create and submit source code in the unified programming interface 110, which can be a GPU-specific programming language. The unified programming interface 110 may provide a single framework for developers to write their GPU programing code on. Once the code is written, it may be directed to a compiler 115, which can be a compiler for a GPU-specific programming language, and which may parse the source code and generate a machine-independent programming language-independent representation. The result may then be distributed from the developer computer system 100 to application 120. Application 120 can contain the shader code in a device-independent form (in addition to everything else the application contains: CPU code, text, other resources, etc.).

The application 120 may be delivered to the target machine 105 in any desired manner, including electronic transport over a network and physical transport of machine-readable media. This generally involves delivery of the application 120 to a server (not shown in FIG. 1) from which the target system 105 may obtain the application 120. The application 120 may be bundled with other data, such as run-time libraries, installers, etc. that may be useful for the installation of the application 120 on the target system 105. In some situations, the application 120 may be provided as part of a larger package of software.

Upon launch of the application 120, one action performed by the application can be creation of a collection of pipeline objects 155 that may include state information 125, fragment shaders 130, and vertex shaders 135, the application may be compiled by an embedded GPU compiler 145 that compiles the representation provided by the compiler 115 into native binary code for the GPU 150. The compiled native code may be cached in cache 140 or stored elsewhere in the target system 105 to improve performance if the same pipeline is recreated later, such as during future launches of the application. Finally, the GPU 150 may execute the native binary code, performing the graphics and compute kernels for data parallel operations.

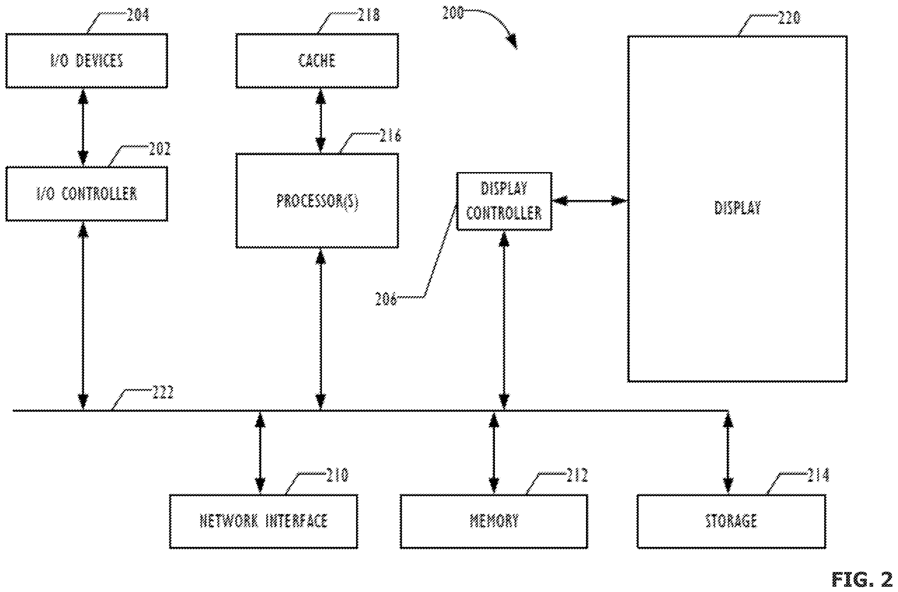

Referring now to FIG. 2, a block diagram illustrates a computer system 200 that can serve as the developer system 100 according to one embodiment. While FIG. 2 illustrates various components of a computer system, it is not intended to represent any particular architecture or manner of interconnecting the components as such details are not germane to the present disclosure. Network computers and other data processing systems (for example, handheld computers, personal digital assistants (PDAs), cellular telephones, entertainment systems, consumer electronic devices, etc.) which have fewer components or perhaps more components may also be used to implement one or more embodiments.

As illustrated in FIG. 2, the computer system 200, which is a form of a data processing system, includes a bus 222 which is coupled to a microprocessor(s) 216, which may be CPUs and/or GPUs, a memory 212, which may include one or both of a volatile read/write random access memory (RAM) and a read-only memory (ROM), and a non-volatile storage device 214. The microprocessor(s) 216 may retrieve instructions from the memory 212 and the storage device 214 and execute the instructions using cache 218 to perform operations described above. The link 222 interconnects these various components together and also interconnects these components 216, 218, 212, and 214 to a display controller 206 and display device 220 and to peripheral devices such as input/output (I/O) devices 204 which may be mice, keyboards, touch screens, modems, network interfaces, printers and other devices which are well known in the art. Typically, the input/output devices 204 are coupled to the system through input/output controllers 202. Where volatile RAM is included in memory 212, the RAM is typically implemented as dynamic RAM (DRAM), which requires power continually in order to refresh or maintain the data in the memory. The display controller 206 and display device 220 may optionally include one or more GPUs to process display data.

The storage device 214 is typically a magnetic hard drive, an optical drive, a non-volatile solid-state memory device, or other types of memory systems, which maintain data (e.g. large amounts of data) even after power is removed from the system. While FIG. 2 shows that the storage device 214 is a local device coupled directly to the rest of the components in the data processing system, embodiments may utilize a non-volatile memory which is remote from the system, such as a network storage device which is coupled to the data processing system through a network interface 210, which may be a wired or wireless networking interface. The link 222 may include one or more links connected to each other through various bridges, controllers, and/or adapters as is well known in the art. Although only a single element of each type is illustrated in FIG. 2 for clarity, multiple elements of any or all of the various element types may be used as desired.

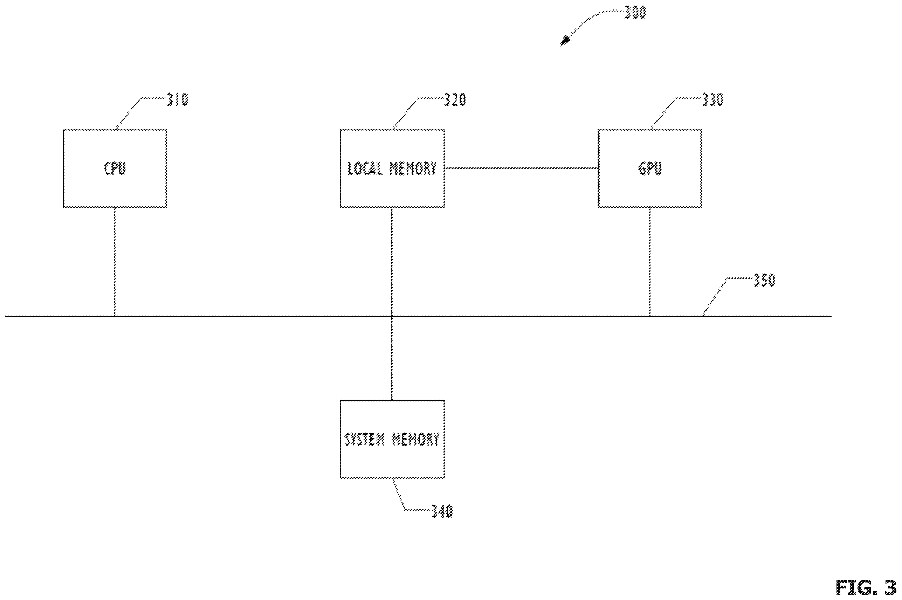

Referring now to FIG. 3, a block diagram illustrates a computing system 300 that can serve as the target computer system 150 according to one embodiment. While FIG. 3 illustrates various components of a computer system, it is not intended to represent any particular architecture or manner of interconnecting the components as such details are not germane to the present disclosure. Network computers and other data processing systems (for example, handheld computers, personal digital assistants (PDAs), cellular telephones, entertainment systems, consumer electronic devices, etc.) which have fewer components or perhaps more components may also be used to implement one or more embodiments.

Computing system 300 includes a CPU 310, a GPU 330. In the embodiment illustrated in FIG. 3, CPU 310 and GPU 330 are included on separate integrated circuits (ICs) or packages. In other embodiments, however, CPU 310 and GPU 330, or the collective functionality thereof, may be included in a single IC or package.

In addition, computing system 300 also includes a system memory 340 that may be accessed by CPU 310 and GPU 330. In various embodiments, computing system 300 may comprise a supercomputer, a desktop computer, a laptop computer, a video-game console, an embedded device, a handheld device (e.g., a mobile telephone, smart phone, MP3 player, a camera, a GPS device, or other mobile device), or any other device that includes or is configured to include a GPU. Although not illustrated in FIG. 3, computing system 300 may also include conventional elements of a computing system, including a display device (e.g., cathode-ray tube, liquid crystal display, plasma display, etc.) for displaying content (e.g., graphics, video, etc.) of computing system 300, as well as input devices (e.g., keyboard, touch pad, mouse, etc.), storage devices (e.g., hard disc, optical disc, etc.) and communication devices (e.g., network interface). Any other elements may be included as desired. Although illustrated as coupled by a common communication link 350, multiple links 350 may be employed with the CPU 310 and GPU 330 connected to separate but interconnected links 350, as desired.

GPU 330 assists CPU 310 by performing certain special functions, such as graphics-processing tasks and data-parallel, general-compute tasks, usually faster than CPU 310 could perform them in software.

GPU 330 is coupled with CPU 310 and system memory 340 over link 350. Link 350 may be any type of bus or communications fabric used in computer systems, including a peripheral component interface (PCI) bus, an accelerated graphics port (AGP) bus, a PCI Express (PCIE) bus, or another type of link, including non-bus links. If multiple links 350 are employed, they may be of different types.

In addition to system memory 340, computing system 300 may include a local memory 320 that is coupled to GPU 330, as well as to link 350. Local memory 320 is available to GPU 330 to provide access to certain data (such as data that is frequently used) faster than would be possible if the data were stored in system memory 340. Both CPU 310 and GPU 330 can also contain caches or local memory within them.

Although a single CPU 310 and GPU 330 are illustrated in FIG. 3, embodiments may employ any number of CPUs 310 and GPUs 330 as desired. Where multiple CPUs 310 or GPUs 330 are employed, each of the CPUs 310 and GPUs 330 may be of different types and architectures. Portions of the application 120 may be executed on different GPUs 330 as desired. In addition, the computer system 300 may employ one or more specialized co-processor devices (not illustrated in FIG. 3), such as cryptographic co-processors, which may be coupled to one or more of the CPUs 310 and GPUs 330, using the link 350 or other links as desired.

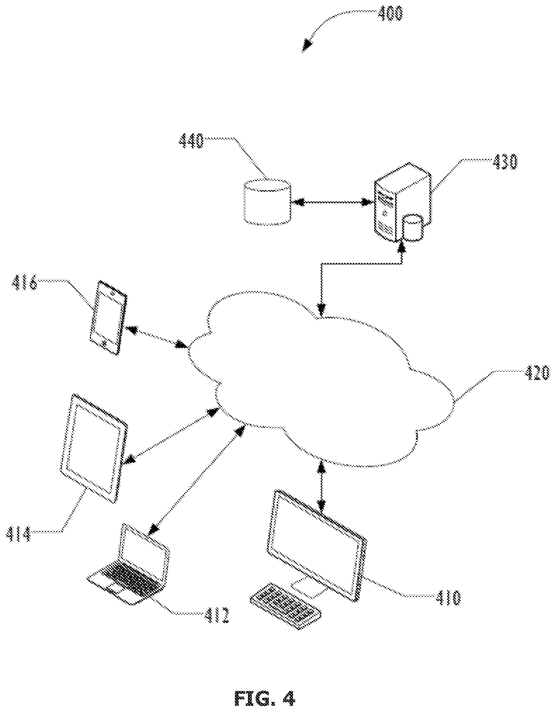

Turning now to FIG. 4, a block diagram illustrates a network of interconnected programmable devices 400, including server 430 and an associated datastore 440, as well as a desktop computer 410, a laptop 412, a tablet 414, and a mobile phone 416. Any of these programmable devices may be the developer system 100 or the target system 105 of FIG. 1. The network 420 that interconnects the programmable devices may be any type of network, wired or wireless, local or wide area, public or private, using any desired network communication protocols for transport of data from one system to the other. Although illustrated as a single network 420, any number of interconnected networks may be used to connect the various programmable devices, which may employ different network technology. In one example, the desktop workstation 410 may be the developer system 100 of FIG. 1, distributing the application 120 to the server 430, which in turn may distribute the application 120 to multiple devices 412, 414, and 416, each of which may employ a different GPU as well as other different components.

A unified programming interface may be used to develop software on a system generally corresponding to that described above with respect to Fig. 2 for execution on a system generally corresponding to that described above with respect to Fig. 3. An example of such a unified programming interface is disclosed in co-pending Provisional U.S. Patent Application 62/005,821, filed May 30, 2014 and entitled "System and Method for Unified Application Programming Interface and Model".

Aspects of an innovative GPU programming framework and associated APIs may be best understood as a tiered-structure having three levels:

A first level is things that must be defined at the time a rendering pass is started and cannot be changed until the rendering pass is complete. First and foremost of these is the image that is being rendered to, i.e., the frame buffer configuration. Frame buffer configuration can include buffer size and dimensions, color parameters, etc. The fixation of frame buffer configuration at the start and for the duration of a render pass is in contradistinction to prior art GPU frameworks/APIs, in which change to frame buffer configuration is treated just like any other command, and can thus appear at any point, including in the middle of a rendering pass. Further aspects of frame buffer configuration are described in the co-pending application mentioned above.

A second level for is choosing a pipeline state object, which includes all of the graphics state that must be compiled into GPU code. Because running the GPU compiler on the target system is computationally expensive, it is preferable to do all of this at once, generally not at run time, but rather at the time the application is installed on the target system or when the application is loaded for execution. Further aspects and details of the pipeline state object are discussed in greater detail below. By incorporating functionality triggering a GPU code re-compile into a pipeline state object, APIs may be developed that make a developer aware of when the code being written will result in a computationally expensive and time-consuming recompile. Further aspects of the pipeline state object are described below.

A third level is state options that are easy/inexpensive to change on the fly (e.g., during execution of the application) without the necessity of compiling new GPU code. Further aspects of these state options are described below as well as in the co-pending application.

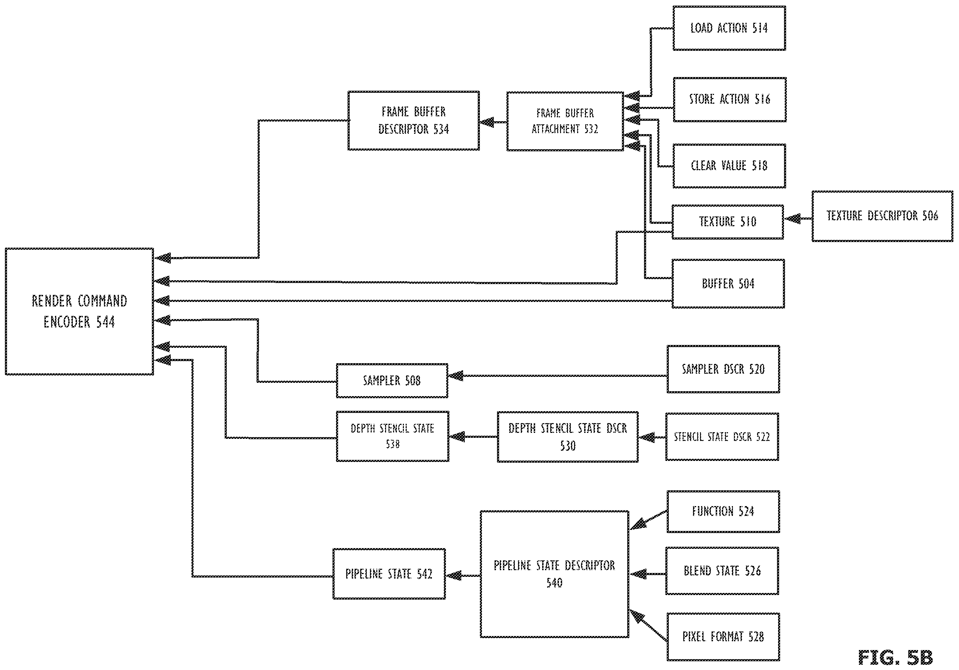

Once a frame buffer has been defined, a command or sequence of commands to render an object to the frame buffer can be created. In some embodiments, this task can fall to a render command encoder 544 as illustrated in Fig. 5B. Render command encoder 544 uses as inputs texture object 510, buffer object 504, sampler object 508, depth stencil state object 538, and pipeline state object 542 to create a render command which may be rendered at a destination. A frame buffer descriptor can be configured as part of beginning a render command. Then, the application can append a sequence of SetPipelineState, SetlnexpensiveState, and Draw commands to declare the set of objects that will be drawn into the frame buffer. Put another way: for each FramebufferDescriptor and/or RenderCommand, there can be one or more of the input objects and draw commands issued, and then the RenderCommand can be ended by the application to tell the graphics system that no more commands will be appended.

Sampler 508 may be an immutable objected constructed using the Device method newSamplerWithDescriptor, which uses the sampler descriptor object 520 as an input value. Sampler descriptor object 520 may in turn be a mutable container for sampler properties including filtering options, addressing modes, maximum anisotropy, level-of-detail parameters, and depth comparison mode. To construct the sampler 508, desired values for sampler properties may be set in the sampler descriptor object 520 before it is used as an input in constructing the sampler 508.

Depth stencil state object 538 may be a mutable object used in constructing the render command encoder object 544. Depth stencil state object 538 may itself be constructed using depth stencil state descriptor object 530, which may be a mutable state object that contains settings for depth and/or stencil state. For example, depth stencil state descriptor object 530 may include a depth value for setting the depth, stencil back face state and stencil front face state properties for specifying separate stencil states for front and back-facing primitives, and a depth compare function property for specifying how a depth test is performed. For example, leaving the value of the depth compare function property at its default value indicates that the depth test always passes, which means an incoming fragment remains a candidate to replace the data at the specified location. If a fragment's depth value fails the depth test, the incoming fragment is discarded. Construction of a custom depth stencil state descriptor object 530 itself may require creation of a stencil state object 522 which may be an immutable state object. Other graphics states may also be part of the pipeline.

Pipeline state 542, examples of which are discussed below, may be an object containing compiled graphics rendering state, such as rasterization (including multisampling), visibility, and blend state. Pipeline state 542 may also contain programmable states such as two graphics shader functions to be executed on the GPU. One of these shader functions may be for vertex operations and one for fragment operations. The state in the pipeline state object 542 may generally be assembled and compiled at runtime. Pipeline state object 542 may be constructed using the pipeline state descriptor object 540 which may be a mutable descriptor object and a container for graphics rendering states.

In general to construct the Pipeline state object 542, first a pipeline state descriptor object 540 may be constructed and then its values may be set as desired. For example, a rasterization enabled property (BOOL type) may be set to NO, so that all primitives are dropped before rasterization, and no fragments are processed. Disabling rasterization may be useful to obtain feedback from vertex-only transformations. Other possible values that may be set include vertex and fragment function properties that help specify the vertex and fragment shaders, and a value for the blend state that specifies the blend state of a specified frame buffer attachment. If the frame buffer attachment supports multisampling, then multiple samples can be created per fragment, and the following pipeline state properties can be set to determine coverage: the sampleCount property for the number of samples for each fragment, the sampleMask property for specifying a bitmask that is initially bitwise ANDed with the coveragemask produced by the rasterizer (by default, the sampleMask bitmask may generally be all ones, so a bitwise AND with that bitmask does not change any values; an alphaToCoverageEnabled property to specify if the alpha channel fragment output may be used as a coverage mask, an alphaToOneEnabled property for setting the alpha channel fragment values, and a sampleCoverage property specifying a value (between 0.0 and 1.0, inclusive) that is used to generate a coverage mask, which may then be bitwise ANDed with the coverage value produced by the rasterizer.

Pipeline state descriptor object 540 itself may be constructed using one or objects that include function object 524, blend state 526, and pixel format 528. Function object 524 may represent a handle to a single function that runs on the GPU and may be created by compiling source code from an input value string. Function object 524 generally only relates to state values on graphics apps but not compute apps. Blend state 526 may be a mutable object containing values for blending. Blending may be a fragment operation that uses a highly configurable blend function to mix the incoming fragment's color data (source) with values in the frame buffer (destination). Blend functions may determine how the source and destination fragment values are combined with blend factors. Some of the properties that define the blend state may include 1) blending enabled property (BOOL value) for enabling blending; 2) writeMask property for specifying a bitmask that restricts which color bits are blended; 3) rgbBlendFunciton and alphaBlendFunction properties for assigning blend functions for the RGB and Alpha fragment data; and 4) sourceRGBBIendFactor, sourceAlphaBlendFactor, destinationRGBBIendFactor, and destinationAlphaBlendFactor properties for assigning source and destination blend factors.

In general, it may be desirable to know the pixel formats of every render target (multiple colors, depth, and stencil) as part of building the RenderPipelineState. This can allow the compiler to know how to format the output memory. Additionally, pipeline objects can be created at any time, although it may be desirable to create them early during application launch. This allows selection of a pre-created pipeline during the second level of execution described above.

Once all the required objects have been constructed, render command encoder object 544 may be constructed using those objects. Thus, in summary, to construct and initialize the render command encoder object 544, in one embodiment, first one or more frame buffer attachments 532 each of which containing the state of a destination for rendering commands (e.g., color buffer, depth buffer, or stencil buffer) may be constructed. Next, a mutable frame buffer descriptor object 534 that contains the frame buffer state, including its associated attachments may be constructed. Then using the frame buffer descriptor object 534, render command encoder object 544 can be constructed by calling a command buffer method (e.g., renderCommandEncoderWithFramebuffer).

At this point, a pipeline state object 542 to represent the compiled pipeline state, such as shader, rasterization (including multisampling), visibility, and blend state may be constructed by first creating the mutable descriptor object, pipeline state descriptor 540, and setting the desired graphics rendering state for the render-to-texture operation for pipeline state descriptor object 540. After pipeline state object 542 has been created, a render command encoder method (e.g., setPipelineState) may be called to associate the pipeline state object 542 to the render command encoder 544.

To reiterate, pipelines can be really expensive to create because they invoke the compiler. Ideally an application would create many pipelines upon launch or when loading content, and then for each frame create a render command encoder and, in sequence, set the pipelines, other states, and resources necessary for each object to draw. At any given time, a render command can have one "current" pipeline, which can be changed over time. The act of switching to an already-created pipeline can be expected to be inexpensive. An application can also create a pipeline at any time, including just before execution, but it may take an unsatisfyingly long time if done during animation. Thus, once created, a pipeline can be used with many different render commands. (For example, an application could create one pipeline and hold onto it forever, where a new render command can be created for each frame, and for each frame the pipeline can be used to draw an object.

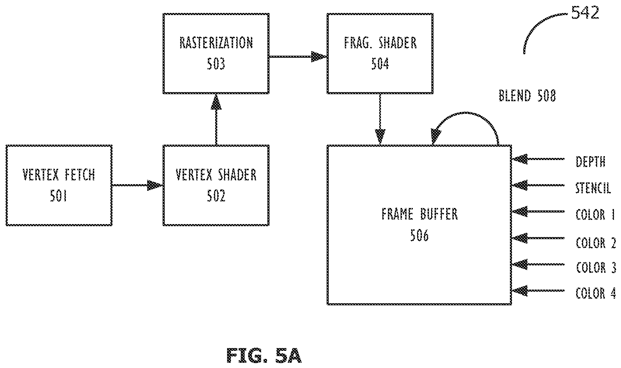

An exemplary pipeline state object 542 is illustrated in Fig. 5A. A pipeline state object can be associated, for example, with an object to be drawn. The illustrated pipeline state object 542 includes five components, a vertex fetch 501, a vertex shader 502, a rasterization 503, a fragment shader 504, and a frame buffer 506. Historically, each of these objects would have been controlled by a separate API. However, in any given instantiation associated with a real-world implementation, there is a predefined data flow among these objects. For example, the data flow from the vertex shader to the fragment shader is an interaction that is tied very closely to the code generation for execution on the GPU. Similarly, illustrated blend operation 508 reads data from the frame buffer, modifies it in some way, and writes it back to the frame buffer. This operation, too, is closely linked to the GPU code generation and compilation.

Because of the fixed relationships between the objects and the linkage between these relationships and the GPU code generation and compilation process, it is advantageous to combine them into a single pipeline state object. This allows the requisite GPU code to be generated and compiled only one time, either when the application is installed on the target system or when the application is loaded. The GPU machine code so-generated is then stored, allowing the code to be retrieved, passed to the GPU, and executed whenever a particular object is drawn. This avoids the necessity of generating and compiling the associated code on the fly each time a particular object is to be drawn.

In other words, pipeline state objects are immutable objects that represent compiled machine code. By use of different pipeline state objects for various graphical operations, when a draw call is made for an object associated with a particular pipeline state object, it is not necessary to look at the state of the API to determine, for example, whether a shader must be compiled because all states associated with the application program have already had corresponding GPU code generated, compiled, and stored so as to be ready for execution with whatever parameters are supplied on the fly during application run time.

In the prior art, determinations whether a code recompilation was necessary were typically made by generating a hash function for each compiled and cached GPU code segment. When a state was changed that might require new code generation, a corresponding hash of the state could be generated and checked against the available cached compiled states to determine whether the required executable code was already available. While this saved some time for instances in which the requisite code had already been compiled, even the checking process could be unduly time consuming in some applications. Thus, the use of pipeline state objects as described above can save significant time during program execution because the generation and compilation of all required GPU code can be front loaded to application installation or initiation, rather than taking place during the rendering operations.

While the parameters that affect code generation are incorporated into the immutable pipeline state object, there are still a variety of other parameters that do not affect code generation or require recompilation of the GPU code. These data and parameters, e.g., size of viewport, input textures, input vertex data, occlusion queries, etc., are available to be modified through API calls. In short, this can be understood as follows: changing the data that is manipulated is easy and computationally inexpensive, and is thus encapsulated in mutable objects and modifiable by API calls. Changing the way the data is manipulated is harder and computationally intensive, and is thus encapsulated in immutable objects that are constructed and compiled once and not at draw time. Thus, the goal for pipeline state objects is to encapsulate everything that requires code generation. What requires code generation/compilation is different from GPU to GPU, so it is desirable to create a union of all such functions so that general API can be used with a variety of GPU hardware. Exemplary pipeline state objects can encapsulate the following: vertex fetch configuration, vertex shader, fragment shader, blend state, color formats attached to frame buffer, multi-sample mask, depth write enabled state, and rasterization enabled state.

Program instructions and/or a database that represent and embody the described techniques and mechanisms may be stored on a machine-readable storage medium. The program instructions may include machine-readable instructions that when executed by the machine, cause the machine to perform the actions of the techniques described herein.

A machine-readable storage medium may include any storage media accessible by a computer during use to provide instructions and/or data to the computer, and may include multiple instances of a physical medium as if they were a single physical medium. For example, a machine-readable storage medium may include storage media such as magnetic or optical media, e.g., disk (fixed or removable), tape, CD-ROM, DVD-ROM, CD-R, CD-RW, DVD-R, DVD-RW, or Blu-Ray. Storage media may further include volatile or non-volatile memory media such as RAM, ROM, non-volatile memory (e.g., flash memory) accessible via a peripheral interface such as the USB interface, etc. Storage media may include micro-electro-mechanical systems (MEMS), as well as storage media accessible via a communication medium such as a network and/or a wireless link.

## Claims

1. A method for creating a rendering pipeline for a rendering operation used by an application (120) executing on a target computer system (105) comprising a target Graphics Processing Unit GPU (150), the method comprising:
prior to launch of the application (120) on the target computer system (105):
generating GPU-specific code for operation on the GPU (150), wherein the GPU-specific code includes a vertex shader and a fragment shader; and
compiling the GPU-specific code to generate a compiled programmable state;
during execution of the application (120) on the target computer system (105):
assembling a mutable pipeline state descriptor object (540) adapted to set a desired graphic rendering state for the rendering operation, wherein the mutable pipeline state descriptor object (540) includes:
a vertex state associated with the vertex shader;
a fragment state associated with the fragment shader; and
a rasterization state;
compiling the vertex state, the fragment state, and the rasterization state to generate a compiled graphics rendering state;
creating an immutable pipeline state object (542) containing the compiled programmable state and the compiled graphics rendering state, wherein the compiled programmable state encapsulates executable instructions for the GPU (150) and the compiled graphics rendering state externalizes mutable attributes requiring re-compilation when changed;
constructing a render command encoder (544) for the rendering operation; and
associating the immutable pipeline state object (542) with the render command encoder (544).

2. The method of claim 1, wherein the immutable pipeline state object (542) is compiled either when the application loads or when the application is installed, wherein the application is associated with the pipeline state object in that the application displays graphics that result from the pipeline state object.

3. The method of claim 1 or claim 2, wherein the GPU-specific code is binary code.

4. The method of any preceding claim, wherein the rendering operation is a render-to-texture operation.

5. The method of any preceding claim, wherein the mutable pipeline state descriptor object (540) includes one or more of size of viewport, input textures, input vertex data, and occlusion queries.

6. The method of any preceding claim, wherein the mutable pipeline state descriptor object (540) may be modified by API calls.

7. The method of any preceding claim, wherein all parameters that effect code generation for the immutable pipeline state object are part of the compiled pipeline state.

8. A system for creating a rendering pipeline for a rendering operation used by an application (120) executing on a target computer system (105) comprising a target Graphics Processing Unit, GPU (120), the system comprising:
a CPU;
a memory associated with the CPU for holding instructions for the CPU; wherein the CPU is adapted to, when executing the instructions, cause the
production of graphics by:
prior to launch of an application (120) on the target system (105):
generating GPU-specific code for operation on the target GPU (150), wherein the GPU-specific code includes a vertex shader and a fragment shader; and
compiling the GPU-specific code to generate a compiled programmable state;
during execution of the application (120) on the target system (105):
assembling a mutable pipeline state descriptor object (540) adapted to set a desired graphic rendering state for the rendering operation, wherein the mutable pipeline state descriptor object (540) includes:
a vertex state associated with the vertex shader;
a fragment state associated with the fragment shader; and
a rasterization state;
compiling the vertex state, the fragment state, and the rasterization state to generate a compiled graphics rendering state;
creating an immutable pipeline state object (542) containing the compiled programmable state and the compiled graphics rendering state, wherein the compiled programmable state encapsulates executable instructions for the GPU (150) and the compiled graphics rendering state externalizes mutable attributes requiring re-compilation when changed;
constructing a render command encoder (544) for the rendering operation; and
associating the immutable pipeline state object (542) with the render command encoder (544).

9. The system of claim 8 wherein the immutable pipeline state object (542) is compiled either when the application loads or when the application is installed, wherein the application is associated with the pipeline state object in that the application displays graphics that result from the pipeline state object.

10. The system of claim 8 or claim 9, wherein the GPU-specific code is binary code.

11. The system of any of claims 8 to 10, wherein the mutable pipeline state descriptor object (540) includes one or more of size of viewport, input textures, input vertex data, and occlusion queries.

12. The system of any of claims 8 to 11, wherein the mutable pipeline state descriptor parameters may be modified by API calls.

13. The system of any of claims 8 to 12, wherein the render command encoder further includes a mutable depth stencil state object and a mutable frame buffer descriptor object that are compiled during runtime.

14. A non-transitory computer readable medium comprising instructions stored thereon, the instructions when executed causing one or more processors to execute one or more of the methods of claims 1 through 7.

## Patentansprüche

1. Verfahren zum Erzeugen einer Rendering-Pipeline für eine Rendering-Operation, die von einer Anwendung (120) verwendet wird, die auf einem Zielcomputersystem (105) ausgeführt wird, das eine Ziel-Grafikverarbeitungseinheit, GPU (150), umfasst, das Verfahren umfassend:
vor dem Start der Anwendung (120) auf dem Zielcomputersystem (105):
Erzeugen von GPU-spezifischem Code für den Betrieb auf der GPU (150), wobei der GPU-spezifische Code einen Vertex-Shader und einen Fragment-Shader beinhaltet; und
Kompilieren des GPU-spezifischen Codes, um einen kompilierten programmierbaren Zustand zu erzeugen;
während Ausführung der Anwendung (120) auf dem Zielcomputersystem (105):
Zusammenstellen eines veränderbaren Pipeline-Zustandsdeskriptorobjekts (540), das ausgelegt ist, um einen gewünschten Grafik-Rendering-Zustand für die Rendering-Operation einzustellen, wobei das veränderbare Pipeline-Zustandsdeskriptorobjekt (540) beinhaltet:
einen Vertex-Zustand, der mit dem Vertex-Shader verknüpft ist;
einen Fragmentzustand, der mit dem Fragment-Shader verknüpft ist; und
einen Rasterisierungszustand;
Kompilieren des Vertex-Zustands, des Fragment-Zustands und des Rasterisierungszustands, um einen kompilierten Grafik-Rendering-Zustand zu erzeugen;
Erstellen eines unveränderlichen Pipeline-Zustandsobjekts (542), das den kompilierten programmierbaren Zustand und den kompilierten Grafik-Rendering-Zustand enthält, wobei der kompilierte programmierbare Zustand ausführbare Anweisungen für die GPU (150) einkapselt und der kompilierte Grafik-Rendering-Zustand veränderbare Attribute externalisiert, die eine Neu-Kompilierung erfordern, wenn sie geändert werden;
Konstruieren eines Render-Befehlskodierers (544) für die Rendering-Operation; und
Verknüpfen des unveränderlichen Pipeline-Zustandsobjekts (542) mit dem Render-Befehlskodierer (544).

2. Verfahren nach Anspruch 1, wobei das unveränderliche Pipeline-Zustandsobjekt (542) entweder beim Laden der Anwendung oder beim Installieren der Anwendung kompiliert wird, wobei die Anwendung mit dem Pipeline-Zustandsobjekt verknüpft ist, insofern als dass die Anwendung Grafiken anzeigt, die sich aus dem Pipeline-Zustandsobjekt ergeben.

3. Verfahren nach Anspruch 1 oder Anspruch 2, wobei der GPU-spezifische Code ein Binärcode ist.

4. Verfahren nach einem der vorhergehenden Ansprüche, wobei die Rendering-Operation eine Render-to-Texture-Operation ist.

5. Verfahren nach einem der vorhergehenden Ansprüche, wobei das veränderbare Pipeline-Zustandsdeskriptorobjekt (540) eines oder mehrere von Größe des Sichtfensters, Eingabetexturen, Eingabevertexdaten und Okklusionsabfragen beinhaltet.

6. Verfahren nach einem der vorhergehenden Ansprüche, wobei das veränderbare Pipeline-Zustandsdeskriptorobjekt (540) durch API-Aufrufe modifiziert werden kann.

7. Verfahren nach einem der vorhergehenden Ansprüche, wobei alle Parameter, die die Codeerzeugung für das unveränderliche Pipeline-Zustandsobjekt bewirken, Teil des kompilierten Pipeline-Zustands sind.

8. System zum Erzeugen einer Rendering-Pipeline für eine Rendering-Operation, die von einer Anwendung (120) verwendet wird, die auf einem Zielcomputersystem (105) ausgeführt wird, das eine Ziel-Grafikverarbeitungseinheit, GPU (120), umfasst, das System umfassend:
eine CPU;
einen Speicher, der mit der CPU verknüpft ist, um Anweisungen für die CPU zu halten;
wobei die CPU so ausgelegt ist, dass sie beim Ausführen der Anweisungen die Erzeugung von Grafiken verursacht, durch:
vor dem Start einer Anwendung (120) auf dem Zielsystem (105):
Erzeugen von GPU-spezifischem Code für den Betrieb auf der Ziel-GPU (150), wobei der GPU-spezifische Code einen Vertex-Shader und einen Fragment-Shader beinhaltet; und
Kompilieren des GPU-spezifischen Codes, um einen kompilierten programmierbaren Zustand zu erzeugen;
während der Ausführung der Anwendung (120) auf dem Zielsystem (105):
Zusammenstellen eines veränderbaren Pipeline-Zustandsdeskriptorobjekts (540), das so ausgelegt ist, dass es einen gewünschten Grafik-Rendering-Zustand für die Rendering-Operation festlegt, wobei das veränderbare Pipeline-Zustandsdeskriptorobjekt (540) beinhaltet:
einen Vertex-Zustand, der mit dem Vertex-Shader verknüpft ist;
einen Fragmentzustand, der mit dem Fragment-Shader verknüpft ist; und
einen Rasterisierungszustand;
Kompilieren des Vertex-Zustands, des Fragment-Zustands und des Rasterisierungszustands, um einen kompilierten Grafik-Rendering-Zustand zu erzeugen;
Erstellen eines unveränderlichen Pipeline-Zustandsobjekts (542), das den kompilierten programmierbaren Zustand und den kompilierten Grafik-Rendering-Zustand enthält, wobei der kompilierte programmierbare Zustand ausführbare Anweisungen für die GPU (150) einkapselt und der kompilierte Grafik-Rendering-Zustand veränderbare Attribute externalisiert, die eine Neu-Kompilierung erfordern, wenn sie geändert werden;
Konstruieren eines Render-Befehlskodierers (544) für die Rendering-Operation; und
Verknüpfen des unveränderlichen Pipeline-Zustandsobjekts (542) mit dem Render-Befehlskodierer (544).

9. System nach Anspruch 8, wobei das unveränderliche Pipeline-Zustandsobjekt (542) entweder beim Laden der Anwendung oder beim Installieren der Anwendung kompiliert wird,
wobei die Anwendung mit dem Pipeline-Zustandsobjekt insofern verknüpft ist, als dass die Anwendung Grafiken anzeigt, die sich aus dem Pipeline-Zustandsobjekt ergeben.

10. System nach Anspruch 8 oder Anspruch 9, wobei der GPU-spezifische Code Binärcode ist.

11. System nach einem der Ansprüche 8 bis 10, wobei das veränderbare Pipeline-Zustandsdeskriptorobjekt (540) eines oder mehrere von Größe des Sichtfensters, Eingabetexturen, Eingabevertexdaten und Okklusionsabfragen beinhaltet.

12. System nach einem der Ansprüche 8 bis 11, wobei die veränderbaren Pipeline-Zustandsdeskriptor-Parameter durch API-Aufrufe modifiziert werden können.

13. System nach einem der Ansprüche 8 bis 12, wobei der Render-Befehlskodierer ferner ein veränderbares Tiefenschablonenzustandsobjekt und ein veränderbares Framepufferdeskriptorobjekt beinhaltet, die während der Laufzeit kompiliert werden.

14. Nicht-transitorisches computerlesbares Medium, umfassend Anweisungen, die darauf gespeichert sind, wobei die Anweisungen, wenn sie ausgeführt werden, einen oder mehrere Prozessoren veranlassen, eines oder mehrere der Verfahren der Ansprüche 1 bis 7 auszuführen.

## Revendications

1. Un procédé de création d'un pipeline de rendu pour une opération de rendu utilisée par une application (120) s'exécutant sur un système informatique cible (105) comprenant une unité de traitement graphique, GPU (150), cible, le procédé comprenant :
avant le lancement de l'application (120) sur le système informatique cible (105) :
la génération d'un code spécifique à la GPU destiné à fonctionner sur la GPU (150), le code spécifique à la GPU comprenant un nuanceur de sommets et un nuanceur de fragments ; et
la compilation du code spécifique à la GPU pour générer un état programmable compilé ;
pendant l'exécution de l'application (120) sur le système informatique cible (105) :
l'assemblage d'un objet descripteur d'état de pipeline modifiable (540) adapté à un état de rendu graphique souhaité pour l'opération de rendu, l'objet descripteur d'état de pipeline modifiable (540) comprenant :
un état de sommets associé au nuanceur de sommets ;
un état de fragments associé au nuanceur de fragments ; et
un état de rastérisation ;
la compilation de l'état de sommets, de l'état de fragments, et de l'état de rastérisation pour générer un état de rendu graphique compilé ;
la création d'un objet d'état de pipeline non modifiable (542) contenant l'état programmable compilé et l'état de rendu graphique compilé, l'état programmable compilé encapsulant des instructions exécutables destinées au GPU (150) et l'état de restitution graphique compilé externalisant des attributs modifiables nécessitant une recompilation lorsqu'ils sont modifiés ;
la construction d'un codeur de commande de rendu (544) pour l'opération de rendu ; et
l'association de l'objet d'état de pipeline non modifiable (542) au codeur de commande de rendu (544).

2. Le procédé de la revendication 1, dans lequel l'objet d'état de pipeline non modifiable (542) est compilé soit lorsque l'application se charge soit lorsque l'application est installée, l'application étant associée à l'objet d'état de pipeline en ce que l'application affiche des graphismes qui résultent de l'objet d'état de pipeline.

3. Le procédé de la revendication 1 ou de la revendication 2, dans lequel le code spécifique à la GPU est un code binaire.

4. Le procédé de l'une des revendications précédentes, dans lequel l'opération de rendu est une opération de rendu-par-texture.

5. Le procédé de l'une des revendications précédentes, dans lequel l'objet descripteur d'état de pipeline modifiable (540) comprend une ou plusieurs d'entre une dimension de fenêtre, des textures d'entrée, des données de sommet d'entrée, et des requêtes d'occlusion.

6. Le procédé de l'une des revendications précédentes, dans lequel l'objet descripteur d'état de pipeline modifiable (540) peut être modifié par des appels API.

7. Le procédé de l'une des revendications précédentes, dans lequel tous les paramètres qui ont pour effet de générer du code pour l'objet d'état de pipeline non modifiable font partie de l'état de pipeline compilé.

8. Un système de création d'un pipeline de rendu pour une opération de rendu utilisée par une application (120) s'exécutant sur un système informatique cible (105) comprenant une unité de traitement graphique, GPU (150), cible, le système comprenant :
une CPU ;
une mémoire associée à la CPU permettant de conserver des instructions pour la CPU ;
dans lequel la CPU est apte, lorsque les instructions sont exécutées, à faire en sorte de produire des graphismes par :
avant le lancement d'une application (120) sur le système cible (105) :
la génération d'un code spécifique à la GPU destiné à fonctionner sur la GPU cible (150), le code spécifique à la GPU comprenant un nuanceur de sommets et un nuanceur de fragments ; et
la compilation du code spécifique à la GPU pour générer un état programmable compilé ;
pendant l'exécution de l'application (120) sur le système cible (105) :
l'assemblage d'un objet descripteur d'état de pipeline modifiable (540) adapté à un état de rendu graphique souhaité pour l'opération de rendu, l'objet descripteur d'état de pipeline modifiable (540) comprenant :
un état de sommets associé au nuanceur de sommets ;
un état de fragments associé au nuanceur de fragments ; et
un état de rastérisation ;
la compilation de l'état de sommets, de l'état de fragments, et de l'état de rastérisation pour générer un état de rendu graphique compilé ;
la création d'un objet d'état de pipeline non modifiable (542) contenant l'état programmable compilé et l'état de rendu graphique compilé,
l'état programmable compilé encapsulant des instructions exécutables destinées au GPU (150) et
l'état de restitution graphique compilé externalisant des attributs modifiables nécessitant une recompilation lorsqu'ils sont modifiés ;
la construction d'un codeur de commande de rendu (544) pour l'opération de rendu ; et
l'association de l'objet d'état de pipeline non modifiable (542) au codeur de commande de rendu (544) .

9. Le système de la revendication 8, dans lequel l'objet d'état de pipeline non modifiable (542) est compilé soit lorsque l'application se charge soit lorsque l'application est installée, l'application étant associée à l'objet d'état de pipeline en ce que l'application affiche des graphismes qui résultent de l'objet d'état de pipeline.

10. Le système de la revendication 8 ou de la revendication 9, dans lequel le code spécifique à la GPU est un code binaire.

11. Le système de l'une des revendications 8 à 10, dans lequel l'opération de rendu est une opération de rendu-par-texture.

12. Le système de l'une des revendications 8 à 11, dans lequel les paramètres descripteurs d'état de pipeline modifiable peuvent être modifiés par des appels API.

13. Le système de l'une des revendications 8 à 12, dans lequel le codeur de commande de rendu comprend en outre un objet d'état stencil à profondeur modifiable et un objet descripteur de tampon de trame modifiable qui sont compilés pendant le runtime.

14. Un support non transitoire lisible par calculateur comprenant des instructions stockées dessus, dans lequel les instructions font en sorte, lorsqu'elles sont exécutées, qu'un ou plusieurs processeurs exécutent un ou plusieurs des procédés des revendications 1 à 7.
